# EUROPÄISCHE PATENTSCHRIFT

(11) **EP 2 266 200 B1**
(45) Veröffentlichungstag und Bekanntmachung des Hinweises auf die Patenterteilung: **14.09.2011**
(21) Anmeldenummer: 08873271.4
(22) Anmeldetag: 17.11.2008
(51) Int. Cl.: H02P 7/288, G01B 7/00, G01D 5/14, H02K 23/26, H02K 23/30

(54) **ELEKTROMOTOR, MOTORSYSTEM UND VERFAHREN ZUR BESTIMMUNG EINER ABSOLUTEN WINKELLAGE EINES ROTORS EINES ELEKTROMOTORS**
ELECTRIC MOTOR, MOTOR SYSTEM AND METHOD FOR DETERMINING AN ABSOLUTE ANGULAR POSITION OF A ROTOR OF AN ELECTRIC MOTOR
MOTEUR ÉLECTRIQUE, SYSTÈME DE MOTEUR ET PROCÉDÉ DE DÉTERMINATION DE LA POSITION ANGULAIRE ABSOLUE D'UN ROTOR D'UN MOTEUR ÉLECTRIQUE

(30) Priorität: 12.03.2008 DE 102008000614
(43) Veröffentlichungstag der Anmeldung: 29.12.2010
(73) Patentinhaber: Robert Bosch GmbH, 70442 Stuttgart (DE)
(72) Erfinder: HORBELT, Michael, 71229 Leonberg-Warmbronn (DE); OWERFELDT, Andre, 71706 Markgroeningen (DE)
(86) Internationale Anmeldenummer: PCT/EP2008/065639
(87) Internationale Veröffentlichungsnummer: WO 2009/112094

(56) Entgegenhaltungen:
- DE-A1- 4 135 873
- DE-A1-102006 020 157
- JP-A- 3 289 392
- US-A1- 2004 017 124
- US-A1- 2007 031 131

## Beschreibung

### Technisches Gebiet

Die Erfindung betrifft ein Verfahren und eine Vorrichtung zur Bestimmung der absoluten Winkellage eines Rotors in einem Elektromotor.

### Stand der Technik

Zur Erfassung des Drehwinkels bzw. der Winkellage bei rotatorischen Elektromotoren werden üblicherweise geeignete Sensoren verwendet. Diese Sensoren können beispielsweise Positionsgeber auf der Motorwelle des Elektromotors, an dem Rotor des Elektromotors bzw. auf sonstigen durch den Elektromotor bewegten Teilen aufweisen. Die Positionsgeber können beispielsweise in Form von Ringmagneten, Pulsscheiben oder sonstigen Informationsträgern ausgebildet sein und mit einem Detektor zusammen wirken, der mindestens eine Stellung des Rotors des Elektromotors eindeutig einer absoluten Winkellage zuordnen kann.

Als Detektoren werden beispielsweise Hall-Sensoren verwendet, die eine von dem anliegenden Magnetfeld abhängige Hall-Spannung bereitstellen, über die Änderungen Magnetfelds erkannt werden können.

Alternativ kann auf indirekte Weise der Strom bei der Ansteuerung von Wicklungen des Elektromotors mit einer Ansteuerspannung ausgewertet werden und Schwankungen der Stromstärke integriert werden, um die absolute Lage zu ermitteln.

Neben diesem Verfahren besteht die Möglichkeit, die Nuten eines Kommutators eines Elektromotors über die Stromaufnahme zu identifizieren. Überstreichen mehrere Bürsten einer Bürstenanordnung des Kommutators eine oder mehrere Nuten, werden dadurch zwei oder mehr als zwei Wicklungen des Rotors parallel geschaltet. Der veränderte gesamte Widerstand der Parallelschaltung bezüglich dem einer einzelnen Wicklung oder dem einer Parallelschaltung einer davon verschiedenen Anzahl von Wicklungen kann durch einen erhöhten Strom erfasst werden, der durch geeignete Maßnahmen ausgewertet werden kann.

Z.B. erfolgt eine Drehzahlerfassung bei Gleichstrommotoren über eine Auswertung des Verlaufs des aufgenommen Stroms durch zwei bekannte Maßnahmen:
a) Die Stromschwankungen, die aufgrund des veränderten ohmschen Widerstands der Parallelschaltung hervorgerufen werden, wenn eine Nut des Kommutators an einer entsprechenden Kommutatorbürste vorbeiläuft, werden im Zeitbereich ausgewertet. Bei dieser Maßnahme wird durch eine geeignete Filterung ein diskretes Signal erzeugt, welches das Auftreten einer Nut anzeigt. Nachteilig ist jedoch, dass durch die schwach ausgeprägten Stromschwankungen eine eindeutige Signalauswertung schwer zu erreichen ist. Die entsprechenden Filter sind sowohl in diskreter Form als auch durch geeignete Algorithmen aufwendig zu realisieren und schwer abzustimmen.
b) Durch eine Fourier-Transformation des Stromsignals kann die Auswertung in dem Frequenzbereich vorgenommen werden. Die wiederkehrenden Stromschwankungen durch das Vorbeilaufen der Nuten des Kommutators an einem Bürstenpaar werden als eine Spektrallinie dargestellt. Die Position der Spektrallinie auf der Frequenzachse steht in direktem Zusammenhang mit der Drehzahl. Durch diese Methode kann jedoch nur die durchschnittliche Drehzahl während mehrerer zurückliegender Perioden bestimmt werden. Dies führt einerseits zu einem Zeitverzug bei der Bestimmung der Drehzahl und andererseits steht auch kein Zusammenhang zwischen einer aufgetretenen Stromschwankung (Stromrippel) und einem bestimmten Zeitpunkt ihres Auftretens zur Verfügung.

Die Druckschrift JP3289392 offenbart einen mechanisch kommutierten Elektromotor mit Rotorwicklungen, wobei abhängig von einer Position des Rotors eine Impedanzänderung detektiert werden kann. Zur Auswertung der Impedanzänderung wird ein hochfrequentes Signal auf die Rotorwicklungen geschaltet.

Die Druckschrift DE4135873 offenbart ein Verfahren und eine Vorrichtung zur Erfassung der Position und Drehrichtung eines mechanisch kommutierten Elektromotors. Mit Hilfe einer Signalauswerteeinheit wird ein eine systemcharakteristische Grundperiodizität aufweisendes Signal und ein dieser Grundperiodizität überlagertes Signal erlasst und aus einer Korrelation beider Signale die Position der Drehrichtung und/oder sonstige dynamische Kenngrößen ermittelt. Als ein die Grundperiodizität aufweisendes Signal kann der Motorstrom betrachtet werden, wobei vorgeschlagen wird, die Motorwicklungen um eine oder mehrere Windungen in variieren, um die Grundperiodizität zu modulieren.

Es ist Aufgabe der vorliegenden Erfindung, eine Möglichkeit zur Bestimmung des absoluten Lagewinkels eines Elektromotors ohne Verwendung eines Sensors bereitzustellen.

### Offenbarung der Erfindung

Diese Aufgabe wird durch den Elektromotor gemäß. Anspruch 1 sowie durch das Verfahren gemäß Anspruch 8 gelöst.

Weitere vorteilhafte Ausgestaltungen der Erfindung sind in den abhängigen Ansprüchen angegeben.

Gemäß einem ersten Aspekt ist ein Elektromotor vorgesehen. Der Elektromotor umfasst einen Rotor mit mehreren, abhängig von der Winkellage ansteuerbaren Wicklungen, die jeweils ein oder mehrere Spulenelemente aufweisen, sowie einen Stator mit mindestens zwei verschiedenen, auf den Rotor gerichteten Magnetpolen. Der Rotor und der Stator können gegeneinander durch Ansteuern der mehreren Wicklungen und durch Wechselwirken eines dadurch in den Spulenelementen hervorgerufenen Magnetfeldes mit dem Magnetfeld des Magneten bewegt werden. Der komplexe Widerstand mindestens einer der Wicklungen ist von dem komplexen Widerstand der anderen der mehreren Wicklungen verschieden.

Die Wicklungen werden entsprechend der Winkellage des Rotors angesteuert. Durch das Vorsehen einer Wicklung mit einem abweichenden komplexen Widerstand kann durch permanentes oder zyklisches Erfassen einer von dem komplexen Widerstand abhängigen resultierenden Größe erkannt werden, wann diese gerade angesteuert wird. Mit der Kenntnis über die absolute Winkellage der angesteuerten Wicklung und dem Feststellen, das die betreffende Wicklung gerade angesteuert wird, kann die Winkellage der angesteuerten Wicklung als die absolute Winkellage des Rotors bestimmt werden. Dies ermöglicht es in einfacher Weise, eine absolute Winkellage zu detektieren, ohne einen Sensor oder sonstige aufwendige Maßnahmen zur Lagebestimmung vorzusehen.

Dabei ist der komplexe Widerstand der mindestens einen Wicklung durch serielles oder paralleles Verschalten mit einem Bauelement mit einem imaginären Widerstand; und/oder durch eine veränderte Anzahl von Windungen der mindestens einen Wicklung; und/oder durch eine geschichtete Anordnung der Spulenelemente der mindestens einen Wicklung an einem Anker des Rotors bezüglich der anderen der mehreren Wicklungen und/oder durch eine veränderte Lage eines der Spulenelemente der mindestens einen Wicklung an einem Anker des Rotors bezüglich der anderen der mehreren Wicklungen bestimmt.

Weiterhin kann jede der Wicklungen mit einem von den anderen Wicklungen verschiedenen komplexen Widerstand versehen sein.

Zur Ansteuerung der Wicklungen kann ein Kommutator vorgesehen sein, wobei der Kommutator ein Bürstenpaar und mit den Wicklungen verbundene Schleifkontakte aufweist.

Weiterhin kann der Kommutator ausgebildet sein, um abhängig von einer Winkellage des Rotors entweder eine Anzahl von Wicklungen oder eine davon verschiedene, zweite Anzahl von Wicklungen gleichzeitig so zu kontaktieren, dass diese parallel zueinander verschaltet sind. Durch eine derartige Ausbildung des Kommutators ist es weiterhin möglich, die Anzahl der detektierbaren absoluten Winkellagen zu verdoppeln.

Gemäß einem Anwendungsbeispiel ist ein Motorsystem zum Bestimmen einer absoluten Winkellage eines Rotors eines Elektromotors vorgesehen. Das Motorsystem umfasst den obigen Elektromotor und eine Auswerteeinheit, die mit dem Elektromotor verbunden ist. Die Auswerteeinheit umfasst einen Signalgenerator zum Bereitstellen eines Ansteuersignals, mit dem der Elektromotor beaufschlagt wird, eine Erfassungseinheit zum Ermitteln eines resultierenden Signals, das von der Größe des komplexen Widerstands der momentan angesteuerten Wicklung und von dem Ansteuersignal abhängt; und eine Bestimmungseinheit, um die momentan angesteuerte Wicklungen anhand des resultierenden Signals zu identifizieren, wobei anhand der identifizierten Wicklung die absolute Position des Rotors bestimmbar ist.

Das Motorsystem sieht eine Auswerteeinheit vor, die in einfacher Weise ein von dem komplexen Widerstand resultierendes Signal ermittelt und dieses einer bestimmten Winkellage des Rotors zuordnet.

Weiterhin können die Wicklungen des Elektromotors als Filter oder als Schwingkreis verschaltet sein, so dass der komplexe Widerstand der Wicklung das Frequenzverhalten des Filters bzw. des Schwingkreises beeinflusst. Der Signalgenerator stellt das Ansteuersignal als ein Schwingungssignal, insbesondere als ein Spannungssignal mit einer Amplitude und einer Anregungsfrequenz bereit. Die Erfassungseinheit ist ausgebildet, eine Amplitude des resultierenden Signals, ein Amplitudenverhältnis zwischen den Amplituden des Schwingungssignals und des resultierenden Signals und/oder eine Phasenverschiebung zwischen dem Schwingungssignal und dem Verlauf des resultierenden Signals und/oder einer Frequenzverschiebung zwischen dem resultierenden Signal und den Schwingungssignal zu ermitteln. Die Bestimmungseinheit ist ausgebildet, um der ermittelten Amplitude, Amplitudenverhältnis, der Phasenverschiebung oder der Frequenzverschiebung eine Winkellage zuzuordnen.

Weiterhin kann vorgesehen sein, dass die Bestimmungseinheit ausgebildet ist, um das erfasste resultierende Signal entweder einer einzelnen Wicklung oder Parallelschaltung ersten Anzahl von Wicklungen oder einer Parallelschaltung von einer davon verschiedenen zweiten Anzahl der Wicklungen zuzuordnen und um die Winkellage des Rotors des Elektromotors aus der ermittelten Wicklung oder den ermittelten Wicklungen zu bestimmen.

Gemäß einem weiteren Aspekt ist ein Verfahren zum Bestimmen einer absoluten Winkellage eines Rotors des obigen Elektromotors vorgesehen. Das Verfahren umfasst die folgenden Schritte:
- Beaufschlagen des Elektromotors mit einem Ansteuersignal;
- Ermitteln eines resultierenden Signals, das von der Größe des komplexen Widerstands der momentan angesteuerten Wicklung und von dem Ansteuersignal abhängt; und
- Identifizieren einer bestimmten der Wicklungen anhand des resultierenden Signals, wobei anhand der identifizierten Wicklung die absolute Position des Rotors bestimmbar ist.

Das obige Verfahren ermöglicht es in einfacher weise ohne Vorsehen eines zusätzlichen Sensors die absolute Winkellage des Rotors zu bestimmen.

Dabei wird das resultierende Signal an einem Ausgang eines Filters oder eines Schwingkreises, dessen Frequenzverhalten durch die kontaktierte Wicklung des Elektromotors beeinflusst wird, erfasst, wobei das Ansteuersignal einem Schwingungssignal, insbesondere einem Spannungssignal mit einer Amplitude und einer Anregungsfrequenz entspricht, wobei die bestimmte Wicklung anhand der Amplitude des resultierenden Signals und/oder anhand des Amplitudenverhältnisses zwischen den Amplituden des Schwingungssignals und des resultierenden Signals und/oder einer Phasenverschiebung zwischen dem Schwingungssignal und dem Verlauf des resultierenden Signals und/oder einer Frequenzverschiebung zwischen dem resultierenden Signal und den Schwingungssignal identifiziert wird.

Gemäß einer weiteren Ausführungsform kann vorgesehen sein, dass anhand des resultierenden Signals eine einzelne der Wicklungen, die durch den Kommutator kontaktiert wird, oder eine Parallelschaltung von mehreren der Wicklungen, die durch benachbarte Schleifkontakte des Kommutators kontaktiert werden, durch Zuordnung bestimmt werden, wobei die Winkellage des Rotors des Elektromotors aus der bestimmten Wicklung oder den bestimmten Wicklungen ermittelt wird.

Weiterhin kann die Winkellage des Rotors durch Vergleichen eines Abschnittes des Verlaufs des resultierenden Signals mit einem vorbestimmten Signalprofil ermittelt werden.

### Kurzbeschreibung der Zeichnungen

Bevorzugte Ausführungsformen werden nachfolgend anhand der beigefügten Zeichnungen näher erläutert. Es zeigen:
Fig. 1 ein Blockschaltbild eines Motorsystems zur Realisierung der Erfassung einer absoluten Winkellage des Rotors eines Gleichstrommotors;
Fig. 2 eine Querschnittsansicht auf den Gleichstrommotor der Fig. 1 mit einem Kommutator und Rotorwicklungen;
Fig. 3a und 3b schematische Darstellungen der Funktionsweise des Kommutators des Gleichstrommotors nach Fig. 1;
Fig. 4 eine Darstellung von Amplituden eines resultierenden Signals bei einem sich drehenden Elektromotor, dessen Rotor zwei Wicklungen mit verschiedenen komplexen Widerständen aufweist;
Fig. 5 eine Darstellung der verschiedenen Winkellagen, die bei einem Elektromotor mit Wicklungen verschiedenen komplexen Widerstands detektiert werden können;
Fig. 6 Dämpfungseigenschaften der Wicklungen des Elektromotors der Fig. 5, die durch die Anordnung der Fig. 1 detektiert werden;
Fig. 7 ein resultierendes Signal bei der Verwendung des Elektromotors der

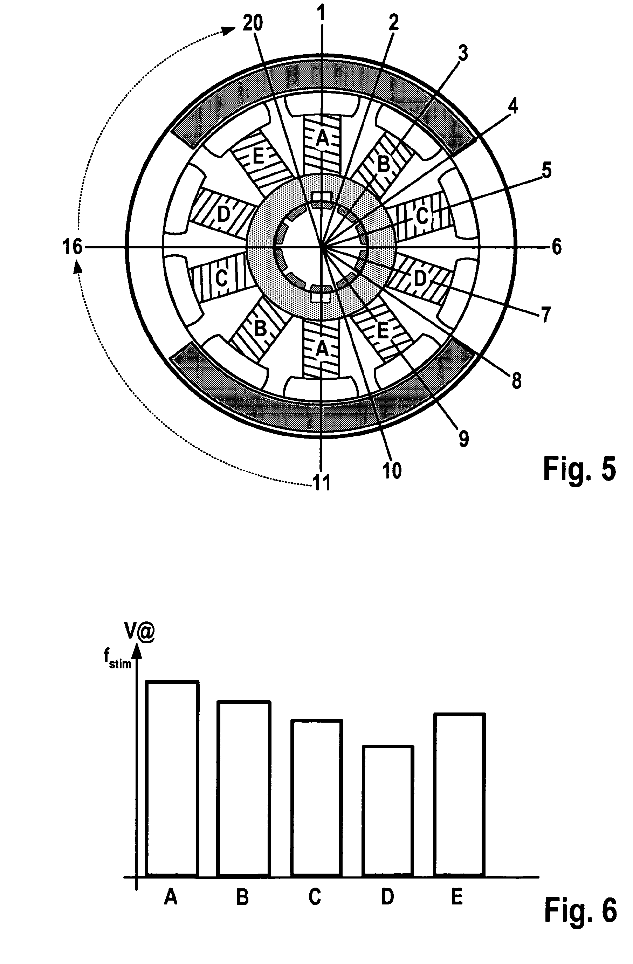

Fig. 5 mit Wicklungen verschiedener elektrischer Impedanz bei einer bestimmten Anregungsfrequenz.

### Beschreibung von Ausführungsformen

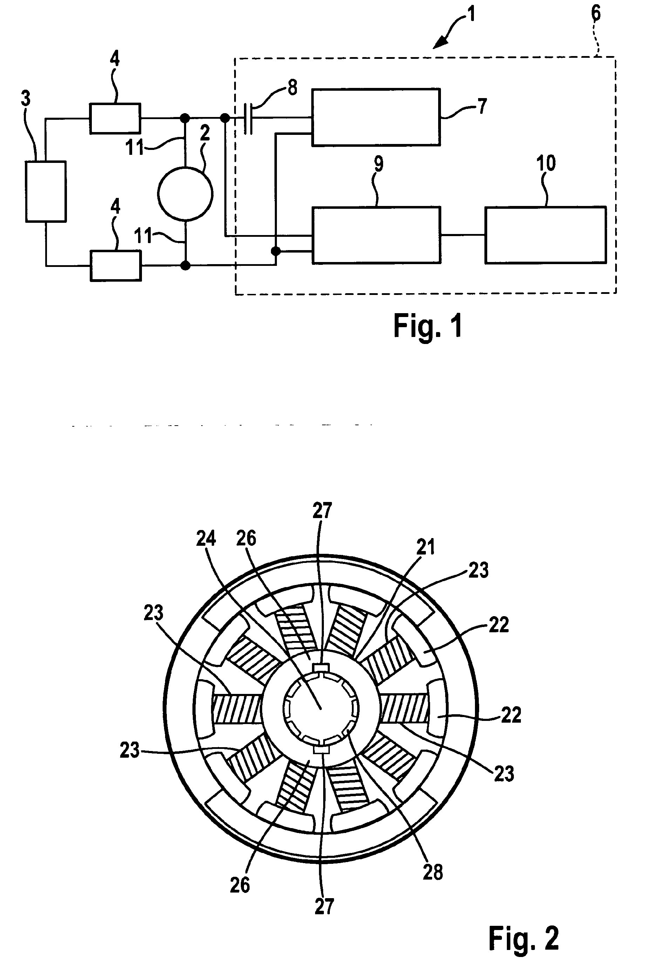

Fig. 1 zeigt eine schematische Darstellung eines Motorsystems 1 mit einer Erfassungseinheit 6 zum Erfassen der absoluten Winkellage eines in einem Elektromotor 2 befindlichen Rotors 21.

Der Elektromotor 2 des Motorsystems 1 wird mithilfe einer geeigneten Gleichspannungsquelle 3 angesteuert. In Zuleitungen 11, die von der Gleichspannungsquelle 3 zu dem Elektromotor 2 verlaufen, sind Entkopplungselemente 4 in Form von realen und/oder komplexen Widerständen, wie z.B. Drosselspulen, angeordnet, um eine geeignete Störentkopplung zwischen der Gleichspannungsquelle 3 und dem Elektromotor 2 zu bewirken.

Wie in Fig. 2 gezeigt ist, weist der Elektromotor 2 fünf Wicklungen 22 auf, die jeweils zwei bezüglich einer Rotorwelle 24 des Rotors 21 gegenüberliegenden Spulenelemente 23 umfassen. Ein Stator 25 des Elektromotors 2 weist einander gegenüberliegende Pole 30 eines oder mehrerer Permanentmagneten auf und ist um den Rotor 21 angeordnet, so dass sich der Rotor 21 um die Rotorwelle 24 frei im Inneren des Stators 25 drehen kann.

Der Elektromotor 2 ist im vorliegenden Ausführungsbeispiel als Gleichstrommotor vorgesehen, dessen Wicklungen 22 mithilfe eines Kommutators 26 elektrisch kontaktiert werden können. Der Kommutator 26 weist um die Rotorwelle 24 angeordnete Schleifkontakte 28 auf, die jeweils mit einer Wicklung 22 in Verbindung stehen. Die Schleifkontakte 28 sind voneinander durch Nuten 29 elektrisch isoliert. Jeweils einander gegenüberliegende Schleifkontakte 28 kontaktieren eine der Wicklungen 22. Die Schleifkontakte 28 werden je nach Winkellage mit Hilfe eines Bürstenpaares 27 mit zu einander bezüglich der Rotorwelle 24 gegenüberliegender Bürsten kontaktiert. Allgemein sind die Schleifkontakte 28 und die Bürsten des Bürstenpaares so angeordnet, dass bei einer bestimmten Stellung des Rotors 21 die Bürsten des Bürstenpaares genau eine Wicklung 22 des Rotors 21 kontaktieren.

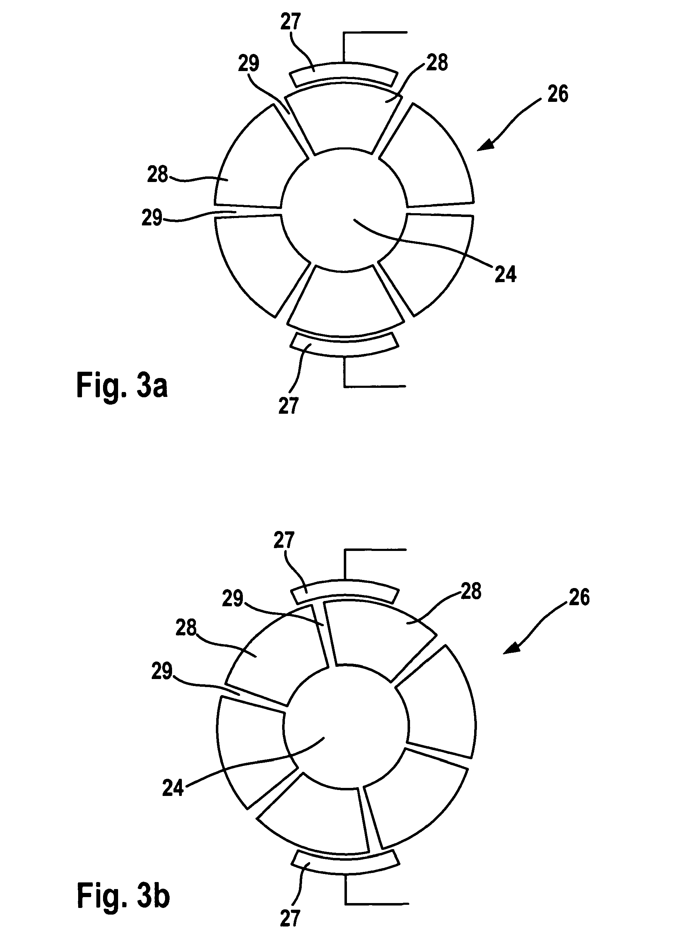

Der Kommutator 26 kann, wie in den Figuren 3a und 3b dargestellt ist, ausgebildet sein, um zwei (in den Figuren 3a und 3b gezeigte) Kontaktierungszustände einzunehmen, die bei einer Rotation des Rotors 21 wechselweise eingenommen werden. In dem in Fig. 3a gezeigten Kontaktierungszustand kontaktiert ein Bürstenpaar 27 des Kommutators 26 eine einzelne Wicklung 22 des Elektromotors 2 und beim Kontaktierungszustand der Fig. 3b kontaktiert das Bürstenpaar 27 des Kommutators 26 zwei Wicklungen 22 des Elektromotors 2 über Nuten zwischen zwei benachbarten Schleifkontakten 28 hinweg. Allgemein kann das Bürstenpaar 27 eine erste Anzahl von Wicklungen in einem Kontaktierungszustand und eine zweite Anzahl von Wicklungen 22 in einem weiteren Kontaktierungszustand kontaktieren.

Um eine absolute Position des Rotors 21 in dem Elektromotor 2 festzustellen, ist vorgesehen, eine elektrische Eigenschaft einer Wicklung 22 bezüglich der entsprechenden elektrischen Eigenschaft einer der anderen Wicklungen 22 verschieden auszubilden. Dadurch kann eine bestimmte Position der Rotorwelle 24 durch eine geeignete elektrische Ansteuerung der Wicklungen 22 und Auswertung eines resultierenden Signals erkannt werden. Bei Kontaktieren der entsprechenden Wicklung 22 durch das Bürstenpaar 27 des Kommutators 26 kann ein entsprechend zugeordnetes elektrisches Verhalten bestimmt werden. Beispielsweise können hierzu Maßnahmen vorgesehen werden, die dazu führen, dass sich als elektrische Eigenschaft der komplexe Widerstand einer der Wicklungen 22 des Elektromotors 2 sich von anderen Wicklungen 22 unterscheidet. Dies kann beispielsweise durch eine veränderte Lage der Wicklung 22 auf Ankern des Rotors 21, durch eine Schichtung der Wicklung 22, durch eine Serienschaltung der Wicklung 22 mit einem Bauelement mit einem realen bzw. komplexen Widerstand, durch eine Parallelschaltung der Wicklung 22 mit einem Bauelement mit einem realen und/oder komplexen Widerstand, durch Vorsehen eines verschieden magnetisch aktiven Material im Inneren der Spulen der Wicklung 22 vorgenommen werden. Auch andere Maßnahmen, wie z.B. eine von den anderen Wicklungen 22 abweichende Wicklungszahl und dgl. sind denkbar, solange sie nicht den gewünschten Betrieb des Elektromotors 2 beeinträchtigen.

Wenn eine bestimmte Wicklung 22 mit dem eingestellten elektrischen Parameter über den Kommutator 26 kontaktiert ist, befindet sich der Kommutator in einer bestimmten Kommutatorstellung. Da der Kommutator 26 fest mit der Rotorwelle 24 des Elektromotors 2 verbunden ist, ist damit auch die Winkellage der Rotorwelle 24 bestimmbar. Auch können mehrere oder alle Wicklungen 22 mit unterschiedlichen elektrischen Parametern, insbesondere mit unterschiedlichen elektrischen Induktivitäten versehen sein, so dass mehrere, insbesondere der doppelten Anzahl der Wicklungen 22 entsprechende, absolute Winkellagen der Rotorwelle 24 unterschieden werden können. Allgemein bestimmt die Anzahl der Schleifkontakte 28 die Auflösung bzw. die Anzahl der detektierbaren Winkellagen der Rotorwelle 24. Durch Detektieren einer Abfolge von sich aus den elektrischen Parametern ergebenden elektrischen Größen bei einem Betrieb des Elektromotors 2 kann weiterhin eine Drehrichtung der Rotorwelle 24 und dessen Drehgeschwindigkeit ermittelt werden.

Durch das Feststellen der absoluten Winkellage kann eine durch Integrieren oder auf sonstige Weise durch Differenzgrößen ermittelte absolute Winkellage zyklisch korrigiert oder normiert werden. Dadurch wird eine mögliche Abweichung der tatsächlichen von der zu erwartenden Winkellage minimiert oder sogar eliminiert.

Mit Bezug zu Fig. 1 kann eine von dem elektrischen Parameter der Wicklung abhängige Größe durch eine geeignete Auswerteschaltung 6 ermittelt werden. Im Folgenden wird angenommen, dass die Wicklungen 22 mit verschiedenen komplexen Widerständen ausgebildet sind. Es stehen dann grundsätzlich mehrere Möglichkeiten zur Verfügung, die Unterschiede zwischen den komplexen Widerständen der Wicklung 22 zu detektieren:
- a): Der Elektromotor 2 wird über die Anschlussleitungen 11 elektrisch stimuliert, so dass er in seiner individuellen Resonanz elektrisch schwingt. Dies führt bei gleicher Anregungsfrequenz bei Wicklungs- verschaltungen (einzelne Wicklung oder eine Anzahl parallel geschal- teter Wicklungen) mit verschiedenen komplexen zu unterschiedlichem Resonanzverhalten, so dass der Elektromotor 2 als AM-Modulator (AM: Amplitudenmodulation) wirkt. Über geeignete Verfahren zur Auswertung, wie z.B. eine Demodulation, kann von der die Höhe der Amplitude auf die Winkellage der Rotorwelle 24 geschlossen werden. Sind alle Wicklungen 22 des Rotors mit verschiedenen komplexen Widerständen behaftet, so kann auf diese Weise eine eindeutige Zu- ordnung der Amplitude des demodulierten Signals zu einer Stellung des Kommutators 26 vorgenommen werden.
- b): Der Elektromotor kann weiterhin als passives Bauelement in eine fre- quenzabhängige Schaltung integriert werden, die beispielsweise als ein Filter ausgebildet ist. Dabei dient die Wicklung 22 des Rotors des Elektromotors 2 als Induktivität. In Abhängigkeit der Winkellage der Rotorwelle 24, d.h. abhängig von der momentan über den Kommuta- tor 26 kontaktierten Wicklung 22 wird der Filter eine entsprechende Filtercharakteristik aufweisen, die bei Anlegen eines Auswertesignals mit einer bestimmten Frequenz und einer bestimmten Amplitude zu einer bestimmten Dämpfung des Signals führt. Das Verhältnis der Amplituden des angelegten Auswertesignals und des resultierenden Signals gibt die Dämpfung an, die einer bestimmten Wicklung zuge- ordnet werden kann. Entspricht das Verhältnis einem für eine be- stimmte Wicklung bekanntem Verhältnis, so ist die betreffende Wick- lung durch den Kommutator 26 kontaktiert, wodurch die absolute Win- kellage der Rotorwelle 24 bestimmt werden kann.
- c): Weiterhin kann ein Schwingkreis aufgebaut werden, in dem die Wick- lungsinduktivität eine Energie speichernde Rolle übernimmt. Dieser Schwingkreis wird abhängig von der Winkellage der Rotorwelle 24 ü- ber den Kommutator 26 kontaktierten Wicklung 22 verstimmt, wenn die Wicklungen 22 mit verschiedenen imaginären Widerstandsanteilen versehen sind. Diese Verstimmung wirkt sich bei einer bestimmten Anregungsfrequenz in Form unterschiedlicher Amplitude des resultie- renden Signals (z.B. bei Anregung durch ein Schwingungssignal mit einer vorbestimmten Spannungsamplitude als resultierendes Strom- signal) in dem Schwingkreis aus. Die Amplitude hängt von dem kom- plexen Widerstand der momentan anliegenden Wicklung ab und kann daher zur Lagewinkelbestimmung herangezogen werden.
- d): Eine weitere Alternative besteht darin, ein Signal mit einem definierten Frequenzspektrum über den Kommutator 26 anzulegen. Der komple- xe Widerstand der momentan aktiven Wicklung 22 des Elektromotors 2 wirkt sich in dem Frequenzspektrum in Abhängigkeit vom Lagewin- kels der Rotorwelle 24 unterschiedlich aus. Dieser Unterschied kann ausgewertet werden und zur Bestimmung des Drehwinkels genutzt werden.
- e): Weiterhin kann die Phasen verschiebende Wirkung des komplexen Widerstandes der entsprechenden Wicklung zur Ermittlung des Lage- winkels herangezogen werden. Dazu wird ein Ansteuersignal be- stimmter Frequenz über den Kommutator 26 angelegt. Zwischen dem dadurch resultierenden Signal (Spannung bzw. Strom) und der Span- nung des angelegten Ansteuersignals stellt sich eine Phasenverschie- bung ein, die detektierbar ist. Die Phasenverschiebung hängt von dem komplexen Widerstand der jeweils kontaktierten Wicklung 22 ab. Sind die komplexen Widerstände der Wicklung verschieden, ergibt sich für jede Phasenverschiebung eine entsprechende Winkellage, die einer Wicklung 22 zugeordnet werden kann. Dadurch können absolute Win- kellagen, bei denen verschiedene Wicklungen 22 des Elektromotors 2 angesteuert werden, unterschieden werden.

Bei der Ausführungsform der Fig. 1 umfasst die Auswerteschaltung 6 einen Signalgenerator 7, der ein Ansteuersignal mit einer bestimmten Frequenz bereitstellt. Weiterhin ist ein Kondensator 8 vorgesehen, der mit dem komplexen Widerstand der momentan kontaktierten Wicklung 22 des Elektromotors 2 einen elektrischen Filter bzw. einen Reihenschwingkreis bildet. Im Detail dient ein erster Anschluss des Kondensators 8 als Eingang des Filters. Ein zweiter Anschluss des Kondensators ist mit dem Elektromotor 2 verbunden und dient als Ausgang des Filters, an dem ein resultierendes Signal abgegriffen wird. Anstelle des Kondensators 8 kann auch ein anderes Bauteil vorgesehen sein, wie z.B. ein Widerstand, eine weitere Induktivität. Alternativ können anstelle des Kondensators 8 auch nur die parasitären Effekte der elektrischen Anbindung, die häufig kapazitiv wirken genutzt werden.

Der Elektromotor 2 wirkt in der dargestellten Ausführungsform wie ein Modulator 7, der das eingekoppelte Ansteuersignal amplitudenmoduliert. Das resultierende amplitudenmodulierte Signal (ein Spannungssignal am Ausgang des Filters) wird an den Anschlüssen des Elektromotors 2 abgegriffen und einem Demodulator 9 als Erfassungseinheit zugeführt. Der Demodulator 9 ermittelt die Amplitude des aus der Einkopplung des Ansteuersignals resultierenden Signals. Die Zuordnung der Amplitude des resultierenden Signals zu einer absoluten Winkellage der Rotorwelle 24 des Elektromotors 2 kann in einer entsprechenden Bestimmungseinheit 10, die mit dem Demodulator 9 verbunden ist, durchgeführt werden.

Zur Reduzierung der Energie des Ansteuersignals kann beispielsweise vorgesehen sein, die Frequenz nicht kontinuierlich, sondern mit einem definierten oder adaptierbaren Tastverhältnis in einer festen oder adaptierbaren Frequenz zu aktivieren. Dadurch kann beispielsweise die Abstrahlung verringert werden.

Ist der Kommutator 26 des Elektromotors 2 ausgebildet, wie es in den Figuren 3a und 3b dargestellt ist, so kontaktiert in dem in Fig. 3a gezeigten Kontaktierungszustand das Bürstenpaar des Kommutators 26 eine Wicklung 22. Bei Drehung der Rotorwelle kann der Kommutator weiterhin Kontaktierungszustände annehmen, die in Fig. 3b dargestellt sind. Dabei kontaktiert jede Bürste des Bürstenpaares 27 zwei benachbarte Schleifkontakte 28, so dass die betreffenden Wicklungen 22 parallel geschaltet werden, und gemeinsam elektrisch angesteuert werden. Die resultierende Parallelschaltung von zwei benachbarten Wicklungen 22 des Rotors führt zu einer deutlichen Veränderung des komplexen Widerstands der zwischen den Anschlussleitungen 11 des Elektromotors 2 anliegt. Somit können bei einer Auswertung des durch den Elektromotor 2 modulierten Signals bei Anlegen des Ansteuersignals mit einer bestimmten Anregungsfrequenz die beiden Kontaktierungszustände deutlich anhand der Amplitude des demodulierten Signals unterschieden werden.

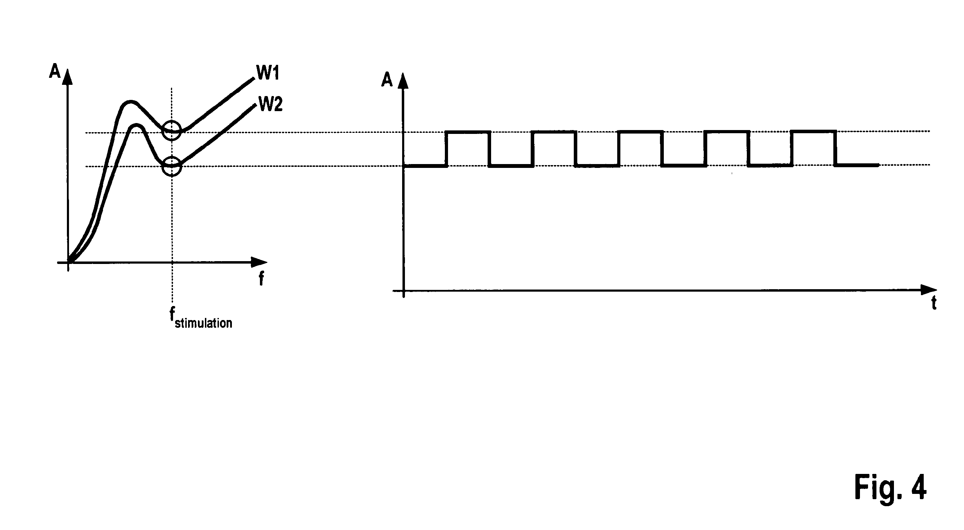

Wie in Fig. 4 gezeigt ist, wird die Anregungsfrequenz fₛₜᵢₘᵤₗₐₜᵢₒₙ vorzugsweise so gewählt, dass die entsprechenden Amplituden des resultierenden Signals bzw. des demodulierten Signals zwischen den beiden Kontaktierungszuständen (Fig. 3a und Fig. 3b) des Kommutators 26 deutlich unterschieden werden können. Bei Wicklungen mit identischen elektrischen Eigenschaften (gleichem komplexen Widerstand) führt dies zu einem Signalverlauf des demodulierten Signals, wie er in Fig. 4 gezeigt ist.

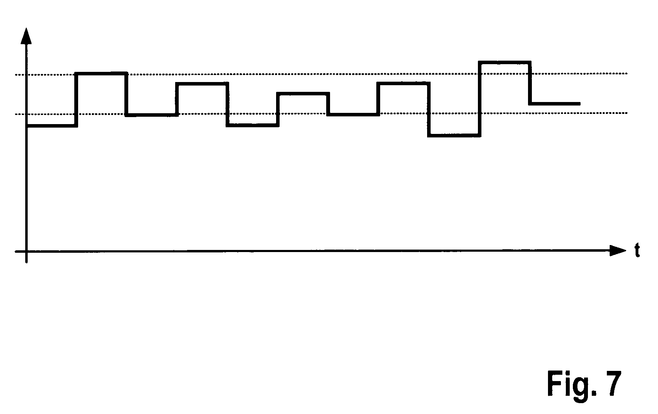

Werden bei einem Elektromotor 2 mit fünf Wicklungen 22, wie er in Fig. 2 dargestellt ist, jede Wicklung 22 mit einem unterschiedlichen komplexen Widerstand versehen, so kann der Elektromotor 2 bezüglich des Bürstenpaares 27 des Kommutators 26 zwanzig verschiedene Positionen einnehmen, die ein zueinander unterschiedliches elektrisches Verhalten aufweisen. Dies ist in Fig. 5 dargestellt. Weisen die einzelnen Wicklungen 22 ein Dämpfungsverhalten auf, wie es beispielsweise in Fig. 6 dargestellt ist, so erhält man bei dem Betrieb des Elektromotors 2 einen Signalverlauf des demodulierten Signals, wie er in Fig. 7 dargestellt ist. Je nach Abstimmung der Abstimmungsfrequenz fₛₜᵢₘₗₐₜᵢₒₙ bezüglich der komplexen Widerstände der Wicklungen 22 erhält man um einen Amplitudenwert schwankendes demoduliertes Signal, dessen Amplitude jedem der Kontaktierungszustände des Kommutators und den einzelnen Wicklungen 22 eindeutig zuordbar ist.

Bei einer bestimmten Drehrichtung des Elektromotors 2 ergibt sich zudem ein charakteristisches Amplitudenprofil. Das Amplitudenprofil kann dazu verwendet werden, die Höhe der detektierten Amplituden zu plausibilisieren, wenn die Höhe der Amplituden aufgrund von Messungenauigkeiten oder Störeinflüssen nur ungenau bestimmt werden kann. Dadurch kann die Winkellage der Rotorwelle 24 zu jedem Zeitpunkt eindeutig ermittelt werden.

Vor Inbetriebnahme der absoluten Lageerfassung kann das entsprechende Profil durch Zuordnung von Profilabschnitten zu Winkellagensegmenten bzw. Winkellagen eingelernt werden, so dass bereits aus detektierten Abschnitten des Amplitudenprofils eine Bestimmung der absoluten Winkellage vorgenommen werden kann. Dies kann beispielsweise dadurch durchgeführt werden, indem die erwarteten, d.h. eingelernten Amplitudenwerte und gemessenen Amplitudenwerte verglichen werden und so festgestellt werden kann, ob die angenommene absolute Winkellage der tatsächlichen Winkellage entspricht. Durch ein geeignetes Korrelationsverfahren kann dann das erwartete Profil an das tatsächliche Profil angepasst werden.

Die Auswertung der Amplitudenverläufe des demodulierten Signals wird vorzugsweise in der Bestimmungseinheit 10 durchgeführt.

## Patentansprüche

1. Elektromotor (2), umfassend:
- einen Rotor (21) mit mehreren, abhängig von der Winkellage ansteuerbaren Wicklungen (22), die jeweils ein oder mehrere Spulenelemente (23) aufweisen;
- einen Stator (25) mit mindestens zwei verschiedenen, auf den Rotor (21) gerichteten Magnetpolen (30);
wobei der Rotor (21) und der Stator (25) gegeneinander durch Ansteuern der mehreren Wicklungen (22) und durch Wechselwirken eines **dadurch** in den Spulenelementen (23) hervorgerufenen Magnetfeldes mit dem Magnetfeld des Magneten bewegbar sind; und wobei der komplexe Widerstand mindestens einer der Wicklungen (23) von dem komplexen Widerstand der anderen der mehreren Wicklungen (23) verschieden ist,
**dadurch gekennzeichnet, dass** der komplexe Widerstand der mindestens einen Wicklung (23)
- durch serielles oder paralleles Verschaltet mit einem Bauelement mit einem imaginären Widerstand; und
- durch eine veränderte Anzahl von Windungen der Spulenelemente (23) mindestens einer Wicklung (22); und/oder
- durch eine geschichtete Anordnung der Spulenelemente (23) der mindestens einen Wicklung (22) an einem Anker des Rotors (21) bezüglich der anderen der mehreren Wicklungen (22); und/oder
- durch eine veränderte Lage eines der Spulenelemente (23) der mindestens einen Wicklung (22) an einem Anker des Rotors (21) bezüglich der anderen der mehreren Wicklungen (22) bestimmt ist.

2. Elektromotor nach Anspruch 1, wobei jede der Wicklungen (22) mit einem von den anderen Wicklungen (22) verschiedenen komplexen Widerstand versehen ist.

3. Elektromotor nach einem der Ansprüche 1 oder 2, wobei zur Ansteuerung der Wicklungen (22) ein Kommutator (26) vorgesehen ist, der ein Bürstenpaar und mit den Wicklungen (22) verbundene Schleifkontakte aufweist.

4. Elektromotor nach Anspruch 3, wobei der Kommutator (26) ausgebildet ist, um, abhängig von einer Winkellage des Rotors (21) entweder eine erste Anzahl von Wicklungen (22) oder eine davon unterschiedliche zweite Anzahl von Wicklungen (22) gleichzeitig so zu kontaktieren, dass diese parallel zueinander verschaltet sind.

5. Motorsystem zum Bestimmen einer absoluten Winkellage eines Rotors (21) eines Elektromotors (2), umfassend:
- einen Elektromotor (2) nach einem der Ansprüche 1 bis 4;
- eine Auswerteeinheit (6), die mit dem Elektromotor (2) verbunden ist; wobei die Auswerteeinheit (6) umfasst:
- einen Signalgenerator (7) zum Bereitstellen eines Ansteuersignals, mit dem der Elektromotor (2) beaufschlagt wird;
- eine Erfassungseinheit (9) zum Ermitteln eines resultierenden Signals, das von der Größe des komplexen Widerstands der momentan angesteuerten Wicklung (22) und von dem Ansteuersignal abhängt; und
- eine Bestimmungseinheit (10), um die momentan angesteuerte Wicklungen (22) anhand des resultierenden Signals zu identifizieren, wobei anhand der identifizierten Wicklung die absolute Position des Rotors (21) bestimmbar ist.

6. Motorsystem nach Anspruch 5, wobei die Wicklungen (22) des Elektromotors (2) als Filter oder als Schwingkreis verschaltet sind, so dass der komplexe Widerstand der Wicklung das Frequenzverhalten des Filters bzw. des Schwingkreises beeinflusst, wobei der Signalgenerator (7) das Ansteuersignal als ein Schwingungssignal, insbesondere als ein Spannungssignal mit einer Amplitude und einer Anregungsfrequenz bereitstellt, wobei die Erfassungseinheit (9) ausgebildet ist, eine Amplitude des resultierenden Signals, ein Amplitudenverhältnis zwischen den Amplituden des Schwingungssignals und des resultierenden Signals und/oder eine Phasenverschiebung zwischen dem Schwingungssignal und dem Verlauf des resultierenden Signals und/oder eine Frequenzverschiebung zwischen dem resultierenden Signal und den Schwingungssignal zu ermitteln, wobei die Bestimmungseinheit (10) ausgebildet ist, um der ermittelten Amplitude, dem Amplitudenverhältnis, der Phasenverschiebung bzw. der Frequenzverschiebung eine Winkellage zuzuordnen.

7. Motorsystem nach Anspruch 5 mit einem Elektromotor nach Anspruch 4, wobei die Bestimmungseinheit (10) ausgebildet ist, um das erfasste resultierende Signal entweder einer einzelnen, bestimmten der Wicklungen (22) oder einer Parallelschaltung von mehreren bestimmten der Wicklungen (22) zuzuordnen und um die Winkellage des Rotors (21) des Elektromotors (2) aus der ermittelten Wicklung (22) oder den ermittelten Wicklungen (22) zu bestimmen.

8. Verfahren zum Bestimmen einer absoluten Winkellage eines
Elektromotors (2) umfassend:
- einen Rotor (21) mit mehreren, abhängig von der Winkellage ansteuerbaren Wicklungen (22), die jeweils ein oder mehrere Spulenelemente (23) aufweisen;
- einen Stator (25) mit mindestens zwei verschiedenen, auf den Rotor (21) gerichteten Magnetpolen (30);
wobei der Rotor (21) und der Stator (25) gegeneinander durch Ansteuern der mehreren Wicklungen (22) und durch Wechselwirken eines **dadurch** in den Spulenelementen (23) hervorgerufenen Magnetfeldes mit dem Magnetfeld des Magneten bewegbar sind; und wobei der komplexe Widerstand mindestens einer der Wicklungen (23) von dem komplexen Widerstand der anderen der mehreren Wicklungen (23) verschieden ist,
wobei das Verfahren folgende Schritte aufweist:
- Beaufschlagen des Elektromotors (2) mit einem Ansteuersignal;
- Ermitteln eines resultierenden Signals, das von der Größe des komplexen Widerstands der momentan angesteuerten Wicklung und von dem Ansteuersignal abhängt;
- Identifizieren einer bestimmten der Wicklungen (22) anhand des resultierenden Signals, wobei anhand der identifizierten Wicklung die absolute Position des Rotors (21) bestimmbar ist,
**dadurch gekennzeichnet,**
**dass** das resultierende Signal an einem Ausgang eines Filters oder eines Schwingkreises, dessen Frequenzverhalten durch die kontaktierte Wicklung des Elektromotors (2) beeinflusst wird, erfasst wird,
wobei das Ansteuersignal einem Schwingungssignal, insbesondere einem Spannungssignal mit einer Amplitude und einer Anregungsfrequenz, entspricht,
wobei die bestimmte Wicklung (22) anhand der Amplitude des resultierenden Signals und/oder anhand des Amplitudenverhältnisses zwischen den Amplituden des Schwingungssignals und des resultierenden Signals und/oder einer Phasenverschiebung zwischen dem Schwingungssignal und dem Verlauf des resultierenden Signals und/oder eine Frequenzverschiebung zwischen dem resultierenden Signal und dem Schwingungssignal identifiziert wird.

9. Verfahren nach Anspruch 8 zum Bestimmen der absoluten Winkellage des Rotors (21) des Elektromotors (2) nach Anspruch 5, wobei anhand des resultierenden Signals eine erste Anzahl der Wicklungen (22), die durch den Kommutator (26) kontaktiert wird, oder eine Parallelschaltung von einer davon verschiedenen zweiten Anzahl der Wicklungen (22), die durch entsprechende Schleifkontakte des Kommutators (26) kontaktiert werden, durch Zuordnung bestimmt werden, wobei die Winkellage des Rotors (21) des Elektromotors (2) aus der bestimmten Wicklung oder den bestimmten Wicklungen (22) ermittelt wird.

10. Verfahren nach einem der Ansprüche 8 oder 9, wobei die Winkellage des Rotors (21) durch Vergleichen eines Abschnittes des Verlaufs des resultierenden Signals mit einem vorbestimmten Signalprofil ermittelt wird.

## Claims

1. Electric motor (2) comprising:
- a rotor (21) having a plurality of windings (22) which can be driven as a function of the angular position and which each have one or more coil elements (23),
- a stator (25) having at least two different magnetic poles (30) which are directed towards the rotor (21);
it being possible for the rotor (21) and the stator (25) to be moved relative to one another by driving of the plurality of windings (22) and by interaction of a magnetic field which is created, as a result, in the coil elements (23) with the magnetic field of the magnets; and with the complex impedance of at least one of the windings (23) differing from the complex impedance of the rest of the plurality of windings (23),
**characterized in that** the complex impedance of the at least one winding (23) is determined
- by serial or parallel interconnection with a component with an imaginary impedance; and
- by a changed number of turns of the coil elements (23) of at least one winding (22); and/or
- by a layered arrangement of the coil elements (23) of the at least one winding (22) on an armature of the rotor (21) relative to the rest of the plurality of windings (22); and/or
- by a changed position of one of the coil elements (23) of the at least one winding (22) on an armature of the rotor (21) relative to the rest of the plurality of windings (22).

2. Electric motor according to Claim 1, with each of windings (22) being provided with a complex impedance which differs from the other windings (22).

3. Electric motor according to either of Claims 1 and 2, with a commutator (26) being provided for driving the windings (22), the said commutator having a pair of brushes and sliding contacts which are connected to the windings (22).

4. Electric motor according to Claim 3, with the commutator (26) being designed to make contact either with a first number of windings (22) or a different, second number of windings (22), at the same time, as a function of an angular position of the rotor (21) such that the said windings are interconnected parallel to one another.

5. Motor system for determining an absolute angular position of a rotor (21) of an electric motor (2), comprising:
- an electric motor (2) according to one of Claims 1 to 4;
- an evaluation unit (6) which is connected to the electric motor (2);
with the evaluation unit (6) comprising:
- a signal generator (7) for providing a drive signal which is supplied to the electric motor (2);
- a detection unit (9) for ascertaining a resulting signal which depends on the magnitude of the complex impedance of the currently driven winding (22) and on the drive signal; and
- a determination unit (10) in order to identify the currently driven windings (22) on the basis of the resulting signal, it being possible to determine the absolute position of the rotor (21) on the basis of the identified winding.

6. Motor system according to Claim 5, with the windings (22) of the electric motor (2) being interconnected in the form of a filter or a resonant circuit, so that the complex impedance of the winding influences the frequency response of the filter or of the resonant circuit, with the signal generator (7) providing the drive signal in the form of an oscillation signal, in particular in the form of a voltage signal with an amplitude and an excitation frequency, with the detection unit (9) being designed to ascertain an amplitude of the resulting signal, an amplitude ratio between the amplitudes of the oscillation signal and the resulting signal and/or a phase shift between the oscillation signal and the profile of the resulting signal and/or a frequency shift between the resulting signal and the oscillation signal, with the determination unit (10) being designed to assign an angular position to the ascertained amplitude, to the amplitude ratio, to the phase shift and to the frequency shift.

7. Motor system according to Claim 5 having an electric motor according to Claim 4, with the determination unit (10) being designed to assign the detected resulting signal either to an individual specific winding (22) or to a parallel circuit of a plurality of specific windings (22) and to determine the angular position of the rotor (21) of the electric motor (2) from the ascertained winding (22) or the ascertained windings (22).

8. Method for determining an absolute angular position of an electric motor (2) comprising:
- a rotor (21) having a plurality of windings (22) which can be driven as a function of the angular position and which each have one or more coil elements (23),
- a stator (25) having at least two different magnetic poles (30) which are directed towards the rotor (21);
it being possible for the rotor (21) and the stator (25) to be moved relative to one another by driving of the plurality of windings (22) and by interaction of a magnetic field which is created, as a result, in the coil elements (23) with the magnetic field of the magnets; and with the complex impedance of at least one of the windings (23) differing from the complex impedance of the rest of the plurality of windings (23),
with the method comprising the following steps:
- supplying a drive signal to the electric motor (2) ;
- ascertaining a resulting signal which is dependent on the magnitude of the complex impedance of the currently driven winding and on the drive signal;
- identifying a specific winding (22) on the basis of the resulting signal, it being possible to determine the absolute position of the rotor (21) on the basis of the identified winding,
**characterized**
**in that** the resulting signal is detected at an output of a filter or a resonant circuit, the frequency response of the said filter or resonant circuit being influenced by the contacted winding of the electric motor (2),
with the drive signal corresponding to an oscillation signal, in particular to a voltage signal with an amplitude and an excitation frequency,
with the specific winding (22) being identified on the basis of the amplitude of the resulting signal and/or on the basis of the amplitude ratio between the amplitudes of the oscillation signal and the resulting signal and/or a phase shift between the oscillation signal and the profile of the resulting signal and/or a frequency shift between the resulting signal and the oscillation signal.

9. Method according to Claim 8 for determining the absolute angular position of the rotor (21) of the electric motor (2) according to Claim 5, with a first number of windings (22), with which the commutator (26) makes contact, or a parallel circuit of a different, second number of windings (22), with which corresponding sliding contacts of the commutator (26) make contact, being determined by assignment on the basis of the resulting signal, with the angular position of the rotor (21) of the electric motor (2) being ascertained from the specific winding or the specific windings (22).

10. Method according to either of Claims 8 and 9, with the angular position of the rotor (21) being ascertained by comparing a section of the profile of the resulting signal with a predetermined signal profile.

## Revendications

1. Moteur électrique (2) comprenant :
- un rotor (21) avec plusieurs enroulements (22) excitables en fonction de la position angulaire, lesquels présentent respectivement un ou plusieurs éléments de bobine (23) ;
- un stator (25) avec au moins deux pôles magnétiques (30) différents dirigés vers le rotor (21) ;
le rotor (21) et le stator (25) pouvant être déplacés l'un par rapport à l'autre par l'excitation des plusieurs enroulements (22) et par l'interaction d'un champ magnétique ainsi provoqué dans les éléments de bobine (23) avec le champ magnétique des aimants ; et la résistance complexe d'au moins l'un des enroulements (23) étant différente de la résistance complexe des autres des plusieurs enroulements (23),
**caractérisé en ce que** la résistance complexe de l'au moins un enroulement (23)
- est déterminée par un branchement en série ou en parallèle avec un composant ayant une résistance imaginaire ; et
- par un nombre modifié de spires de l'élément de bobine (23) d'au moins un enroulement (22) ; et/ou
- par un arrangement stratifié des éléments de bobine (23) de l'au moins un enroulement (22) sur un induit du rotor (21) par rapport aux autres des plusieurs enroulements (22) ; et/ou
- par une position modifiée de l'un des éléments de bobine (23) de l'au moins un enroulement (22) sur un induit du rotor (21) par rapport aux autres des plusieurs enroulements (22).

2. Moteur électrique selon la revendication 1, avec lequel chacun des enroulements (22) est doté d'une résistance complexe différente de celle des autres enroulements (22).

3. Moteur électrique selon l'une des revendications 1 ou 2, avec lequel il est prévu un collecteur (26) pour exciter les enroulements (22), lequel présente une paire de balais et des contacts à friction reliés avec les enroulements (22).

4. Moteur électrique selon la revendication 3, avec lequel le collecteur (26) est configuré pour, suivant une position angulaire du rotor (21), établir le contact simultanément soit avec un premier nombre d'enroulements (22), soit avec un deuxième nombre d'enroulements (22) différent de celui-ci, de telle sorte que ceux-ci sont branchés en parallèles les uns avec les autres.

5. Système à moteur pour déterminer une position angulaire absolue d'un rotor (21) d'un moteur électrique (2), comprenant :
- un moteur électrique (2) selon l'une des revendications 1 à 4 ;
- une unité d'interprétation (6) avec laquelle le moteur électrique (2) est relié;
l'unité d'interprétation (6) comprenant:
- un générateur de signal (7) pour délivrer un signal d'excitation qui sera appliqué au moteur électrique (2) ;
- une unité de détection (9) pour déterminer un signal résultant qui dépend de la grandeur de la résistance complexe de l'enroulement (22) actuellement excité ainsi que du signal d'excitation ; et
- une unité de détermination (10) pour identifier les enroulements (22) actuellement excités au moyen du signal résultant, la position absolue du rotor (21) pouvant être déterminée au moyen de l'enroulement identifié.

6. Système à moteur selon la revendication 5, avec lequel les enroulements (22) du moteur électrique (2) sont branchés sous la forme d'un filtre ou d'un circuit oscillant de sorte que la résistance complexe de l'enroulement influence la réponse en fréquence du filtre ou du circuit oscillant, avec lequel le générateur de signal (7) délivre le signal d'excitation sous la forme d'un signal d'oscillation, notamment sous la forme d'un signal de tension ayant une amplitude et une fréquence d'excitation, avec lequel l'unité de détection (9) est configurée pour déterminer une amplitude du signal résultant, un rapport d'amplitude entre les amplitudes du signal d'oscillation et du signal résultant et/ou un déphasage entre le signal d'oscillation et le tracé du signal résultant et/ou un décalage de fréquence entre le signal résultant et le signal d'oscillation, avec lequel l'unité de détermination (10) est configurée pour associer une position angulaire à l'amplitude, au rapport d'amplitude, au déphasage ou au décalage de fréquence déterminé.

7. Système à moteur selon la revendication 5 avec un moteur électrique selon la revendication 4, avec lequel l'unité de détermination (10) est configurée pour associer le signal résultant détecté soit à un enroulement individuel déterminé parmi les enroulements (22), soit à un circuit parallèle de plusieurs enroulements déterminés parmi les enroulements (22) et pour déterminer la position angulaire du rotor (21) du moteur électrique (2) à partir de l'enroulement (22) déterminé ou des enroulements (22) déterminés.

8. Procédé pour déterminer une position angulaire absolue d'un moteur électrique (2) comprenant :
- un rotor (21) avec plusieurs enroulements (22) excitables en fonction de la position angulaire, lesquels présentent respectivement un ou plusieurs éléments de bobine (23) ;
- un stator (25) avec au moins deux pôles magnétiques (30) différents dirigés vers le rotor (21) ;
le rotor (21) et le stator (25) pouvant être déplacés l'un par rapport à l'autre par l'excitation des plusieurs enroulements (22) et par l'interaction d'un champ magnétique ainsi provoqué dans les éléments de bobine (23) avec le champ magnétique des aimants ; et la résistance complexe d'au moins l'un des enroulements (23) étant différente de la résistance complexe des autres des plusieurs enroulements (23),
le procédé présentant les étapes suivantes :
- Application d'un signal d'excitation au moteur électrique (2) ;
- Détermination d'un signal résultant qui dépend de la grandeur de la résistance complexe de l'enroulement actuellement excité ainsi que du signal d'excitation ;
- Identification d'un enroulement donné parmi les enroulements (22) au moyen du signal résultant, la position absolue du rotor (21) pouvant être déterminée au moyen de l'enroulement identifié,
**caractérisé en ce**
**que** le signal résultant est détecté à une sortie d'un filtre ou d'un circuit oscillant dont la réponse en fréquence est influencée par l'enroulement mis en contact du moteur électrique (2),
le signal d'excitation correspondant à un signal d'oscillation, notamment à un signal de tension ayant une amplitude et une fréquence d'excitation, l'enroulement (22) déterminé étant identifié au moyen de l'amplitude du signal résultant et/ou au moyen du rapport d'amplitude entre les amplitudes du signal d'oscillation et du signal résultant et/ou d'un déphasage entre le signal d'oscillation et le tracé du signal résultant et/ou d'un décalage de fréquence entre le signal résultant et le signal d'oscillation.

9. Procédé selon la revendication 8 pour déterminer la position angulaire absolue du rotor (21) du moteur électrique (2) selon la revendication 5, selon lequel un premier nombre d'enroulements (22), lesquels sont mis en contact par le collecteur (26), ou un circuit parallèle composé d'un deuxième nombre différent de celui-ci d'enroulements (22), lesquels sont mis en contact par les contacts à friction correspondants du collecteur (26), sont déterminés par association au moyen du signal résultant, procédé selon lequel la position angulaire du rotor (21) du moteur électrique (2) est déterminée à partir de l'enroulement déterminé ou des enroulements (22) déterminés.

10. Procédé selon l'une des revendications 8 ou 9, selon lequel la position angulaire du rotor (21) est déterminée en comparant une portion du tracé du signal résultant avec un profil de signal prédéfini.
